# FASCICULE DE BREVET EUROPEEN

(11) **EP 1 686 603 B1**
(45) Date de publication et mention de la délivrance du brevet: **16.03.2011**
(21) Numéro de dépôt: 06290015.4
(22) Date de dépôt: 05.01.2006
(51) Int. Cl.: H01H 51/06, H01H 50/54

(54) **Commutateur de puissance de batterie pour véhicule automobile**
Leistungsschutz für die Batterie eines Fahrzeuges
Power contactor for the battery of an automobile

(30) Priorité: 05.01.2005 FR 0500050
(43) Date de publication de la demande: 02.08.2006
(73) Titulaire: VALEO EQUIPEMENTS ELECTRIQUES MOTEUR, 94017 Créteil Cedex (FR)
(72) Inventeur: Boudjemai, Farouk, 94017 Créteil Cedex (FR); Dubus, Jean-Marc, 94017 Créteil Cedex (FR); Doffin, Hugues, 94017 Créteil Cedex (FR)

(56) Documents cités:
- US-A- 2 521 969
- US-A- 2 725 488
- US-A1- 2004 080 389
- US-B1- 6 424 243

## Description

L'invention concerne un commutateur de puissance. L'invention trouve des applications dans le domaine de l'industrie automobile et, en particulier, dans le domaine des alternateurs et alterno-démarreurs.

### Etat de la technique

Un véhicule automobile comporte de façon conventionnelle :
- un moteur thermique,
- un alternateur, ledit alternateur comportant un rotor bobiné constituant un inducteur dans lequel est amené un courant d'excitation ;
- un stator portant plusieurs bobines ou enroulements, constituant un induit, qui délivre une puissance électrique.
- au moins une unité de stockage d'énergie telle qu'une batterie pouvant fournir environ 12V.

Afin de démarrer efficacement les moteurs thermiques nécessitent de forts couples avec un système d'alterno-demarreur. C'est le cas des moteurs diesel et de forte cylindrée. Il est nécessaire d'alimenter ledit alterno-demarreur sous une tension plus élevée, au moins 24V, de sorte que le couple (et donc la puissance mécanique) de celui-ci soit augmenté. A cet effet, de façon classique, ledit véhicule comporte généralement une deuxième unité de stockage d'énergie telle qu'une deuxième batterie pouvant fournir 12V, les deux batteries étant mises en série lors du démarrage afin de fournir la tension adéquate, soit 24V.

Afin de positionner les deux batteries en série, selon un premier état de la technique, il a été proposé une solution mécanique selon laquelle des relais de puissance classiques sont utilisés permettant la mise en série des batteries lors du démarrage et la mise en parallèle des deux batteries après démarrage.

Un système de démarrage et de génération électrique selon le préambule de la revendication 1, est décrit dans le document "US 2 521 969 A".

Selon un deuxième état de la technique, il a été proposé une solution électronique selon laquelle des transistors de puissance utilisés en tant qu'interrupteurs et une électronique de commande associée sont utilisés pour mettre en série ou parallèle les deux batteries.

Le premier état de la technique présente un premier problème selon lequel la réalisation de cette fonction de commutation série/parallèle met en oeuvre au moins deux relais de puissance. Ces relais de puissance ne supportent pas de forts courants permanents liés au fonctionnement de l'alterno-demarreur en mode générateur. De plus, lors d'un démarrage, un courant d'environ 700 ampères fourni au système d'alterno-démarreur peut entraîner un risque de destruction des contacts des relais lié à cette surintensité. De plus, dans le cas où un relais ne s'ouvre pas, un risque de mise en court-circuit d'une des deux batteries pourrait arriver. De plus, ces relais de puissance présentent un coût non négligeable en terme économique ainsi qu'un encombrement non négligeable étant donné leur volume important pour cette gamme de courant à tenir. Enfin, dans cette utilisation la durée de vie des relais est limitée étant donné les courants importants et les contraintes environnementales liées au secteur automobile.

Le deuxième état de la technique présente un inconvénient selon lequel il est nécessaire d'avoir une multitude de transistors de puissance montés sur un dissipateur afin de pouvoir supporter un fort courant lors du démarrage et tenir un courant permanent important lors du fonctionnement en mode alternateur. Ceci entraîne un surcoût en terme de place étant donné l'encombrement du boîtier nécessaire à la mise en oeuvre de ces transistors. Ledit boîtier comporte une carte de commande, le dissipateur ainsi qu'une ceinture mécanique pour assembler les deux éléments précédents. De plus cette solution présente un coût non négligeable en terme économique.

### Exposé de l'invention

Aussi, un problème technique à résoudre par l'objet de la présente invention est de proposer un système de démarrage et de génération électrique, qui permettent d'obtenir la mise en série et parallèle des unités de stockage d'énergie de manière simple et fiable et pouvant supporter de forts courants.

Le problème technique est résolu par les caractéristiques techniques de la revendication 1.

Ainsi, comme on le verra en détail plus loin, la présente invention présente l'avantage d'avoir un unique moyen pour effectuer les fonctions des trois interrupteurs permettant d'effectuer la mise en parallèle ou en série des deux batteries. De plus, elle utilise la présence d'un courant dans la bobine du contacteur, courant qui est déjà présent lors du démarrage, évitant ainsi d'avoir des moyens additionnels pour fournir un courant dédié.

Le deuxième interrupteur est destiné à être ouvert en position de repos. Ce deuxième interrupteur va permettre de réaliser une liaison série tandis que le premier interrupteur réalise une liaison parallèle ou vice et versa.

Le contacteur comporte en outre un troisième interrupteur, ledit interrupteur étant destiné à être fermé en position de repos.

Ce troisième interrupteur permet de mettre en parallèle une deuxième batterie avec une première batterie.

Un interrupteur destiné à être ouvert en position de repos est composé de:
- un premier ensemble de contacts,
- un deuxième ensemble de contacts destinés à entrer en contact avec des contacts du premier ensemble de contacts.

Ainsi, une connexion entre les contacts du premier et deuxième ensemble est effective en mode repos, assurant ainsi la mise en parallèle de batteries avant un quelconque démarrage.

Le deuxième interrupteur est composé de :
- un troisième ensemble de contacts destinés à connecter une première et une deuxième bornes du contacteur.

Ainsi, lorsque la connexion est réalisée, la mise en série peut être réalisée.

Ledit deuxième ensemble de contacts est solidaire du noyau. Ainsi, lorsque le noyau mobile se déplace en translation, il entraîne le deuxième ensemble de contact de sorte que les contacts entre le premier ensemble de contacts et ledit deuxième ensemble de contacts n'est plus effectif.

Les contacts du premier ensemble de contacts sont destinés à être reliés à des bornes d'unités de stockage.

Ainsi, en mode repos, lorsque qu'aucun courant ne circule dans la bobine du contacteur, le deuxième ensemble de contacts coopère avec toutes les bornes des batteries via le premier ensemble de contacts de sorte que les batteries sont en parallèles.

Le deuxième ensemble de contacts est disposé sur un plan solidaire du noyau, et en ce que le contacteur comporte en outre des moyens de débattement angulaires associés auxdits contacts disposés entre lesdits contacts et ledit plan. Ainsi, ces moyens permettent de rattraper des problèmes de co-planéité lorsque le deuxième ensemble de contacts entre en contact avec le premier ensemble de contacts.

Le contacteur comporte en outre :
- des moyens d'amortissement destinés à amortir des rebonds entre le premier ensemble de contacts et le deuxième ensemble de contacts.

Ainsi, cet amortisseur permet d'éviter des rebonds entre le premier ensemble de contacts et le deuxième ensemble de contacts lors du retour à la position repos du noyau mobile.

Le commutateur de puissance comporte en outre :
- un premier élément conducteur reliant une première borne du contacteur à une première borne d'une première unité de stockage,
- un deuxième élément conducteur reliant une deuxième borne du contacteur à une deuxième borne d'une deuxième unité de stockage.

Ainsi, en mode actif, lorsqu'un courant circule dans la bobine, le noyau mobile se déplace de sorte que le deuxième ensemble de contacts ne coopère plus avec les bornes des batteries tandis que le troisième ensemble de contacts coopère via des éléments conducteurs avec une borne de chaque batterie de sorte que les batteries sont en série. Ainsi, ces éléments conducteurs permettent d'établir la liaison effective entre une borne de chaque batterie de polarité différente de sorte que la mise en série est réalisée.

Le contacteur comporte en outre un ressort de maintien du noyau mobile. Ce ressort assure un contact efficace entre les contacts du deuxième ensemble de contacts et le premier ensemble de contacts. De plus, il favorise le maintien du noyau en cas de vibrations du véhicule.

Le contacteur comporte en outre une sortie de commande reliant la bobine à une électronique de commande. Cette électronique de commande permet au contacteur d'être commandé avantageusement par des modules électroniques telles qu'un calculateur du moteur thermique ou celui d'une machine électrique tournante réversible couramment appelée alterno-démarreur.

Le contacteur comporte en outre un guide anti-pivotement du noyau mobile. De cette manière, le noyau ne peut pivoter, ce qui évite un court-circuit entre les unités de stockage.

Le contacteur comporte en outre un entrefer de distance comprise dans la plage de valeurs 1,5mm à 4mm. Ainsi, grâce à un entrefer peu important, il n'est pas nécessaire d'avoir un courant important pour que le noyau dudit contacteur se déplace.

Par ailleurs, les contacts du premier ensemble de contacts sont fixes, et les contacts du deuxième ensemble de contacts sont mobiles.

Enfin, le contacteur électromagnétique comprend en outre un quatrième interrupteur destiné à être fermé en position de repos. Ceci permet notamment d'obtenir trois batteries en parallèle.

Le procédé de commutation comporte les étapes :
- relier lesdites unités de stockage d'énergie au moyen d'un contacteur comprenant :
   o un noyau mobile,
   o une bobine disposée coaxialement audit noyau mobile,
   o un premier, deuxième et troisième ensembles de contacts,
- d'une part, en parallèle au moyen dudit premier et deuxième ensembles de contacts, le premier ensemble de contacts coopérant avec chaque borne des unités de stockage d'énergie respectivement, et
- d'autre part, en série au moyen dudit troisième ensemble de contacts coopérant avec une borne de polarité différente respective de chaque unité de stockage d'énergie,
- ladite mise en série étant activée lorsqu'un courant circule dans la bobine de contacteur.

L'invention s'applique en particulier aux alterno-démarreurs. Ainsi, l'objet de l'invention se rapporte à un système de démarrage et de génération électrique, selon lequel ledit système comprend :
- une machine électrique tournante réversible fonctionnant en mode générateur pour alimenter au moins une unité de stockage et en mode moteur pour démarrer un moteur thermique, ladite machine étant destinée à être reliée à une borne de polarité différente respective de chaque unité de stockage,
- un commutateur de puissance comportant un contacteur électromagnétique, ledit contacteur comprenant :
   o un noyau mobile,
   o une bobine disposée coaxialement audit noyau mobile,
   o un premier et deuxième ensembles de contacts destinés à relier aux moins deux unités de stockage en parallèle au moyen de contacts associés destinés à coopérer avec chaque borne des unités de stockage respectivement lors du mode générateur,
   o un troisième ensemble de contacts destiné à relier deux unités de stockage en série au moyen de contacts destinés à coopérer avec une borne de polarité différente respective de chaque unité de stockage lors du mode moteur,
- ladite mise en série étant activée lorsqu'un courant circule dans ladite bobine.

### Brève description des Figures

La Fig.1 est une représentation schématique d'une mise en parallèle de deux unités de stockage,
La Fig.2 est une représentation schématique d'une mise en série de deux unités de stockage,
La Fig.3 représente une première vue en perspective d'un premier mode de réalisation du commutateur de puissance selon l'invention, ledit commutateur étant logé dans un boîtier étanche,
La Fig.4 représente une coupe longitudinale du commutateur de la Fig. 3,
La Fig.5 est une deuxième vue en perspective du commutateur de puissance de la Fig.3 sans le boîtier étanche, ledit commutateur comprenant un premier et deuxième ensembles de contacts,
La Fig.6 est une troisième vue en perspective du commutateur de puissance de la Fig.5, sans le premier ensemble de contacts,
La Fig.7 est une quatrième vue en perspective du commutateur de puissance de la Fig.5 montrant des bornes du commutateur,
La Fig.8 représente une vue de dessous du commutateur de la Fig.5,
La Fig.9 représente un mode de réalisation non limitatif d'une sortie de commande du commutateur de la Fig.3,
La Fig.10 est une représentation schématique d'un premier mode de réalisation du commutateur de puissance selon l'invention permettant de connecter deux batteries en parallèle,
La Fig.11 est une représentation schématique d'un premier mode de réalisation du commutateur de puissance selon l'invention permettant de connecter deux batteries en série,
La Fig.12a est une vue de profil du premier et deuxième ensembles de contacts du commutateur de la Fig.5,
La Fig.12b est une vue de face du premier et deuxième ensembles de contacts du commutateur de la Fig.5,
La Fig.13 représente une cinquième vue en perspective du commutateur de la Fig.3 intégré dans le boîtier étanche,
La Fig.14 représente un mode de réalisation du boîtier étanche du commutateur de la Fig.3,
La Fig.15 est un graphe illustrant une force magnétique en fonction d'un entrefer pour différentes valeurs de courant circulant dans une bobine du commutateur de la Fig.3,
La Fig.16 est un graphe illustrant un flux magnétique en fonction d'un courant circulant dans une bobine du commutateur de la Fig.3 pour différentes grandeurs d'entrefer,
La Fig. 17 représente une vue en perspective d'un deuxième mode de réalisation du commutateur de puissance selon l'invention, ledit commutateur comportant trois unités de stockage,
La Fig.18 est une représentation schématique d'une mise en parallèle de trois unités de stockage, et
La Fig.19 est une représentation schématique d'une mise en série de deux unités de stockage et la séparation du réseau de démarrage en 24V avec le réseau de bord en 12V du véhicule.

### Description détaillée de modes de réalisation de l'invention.

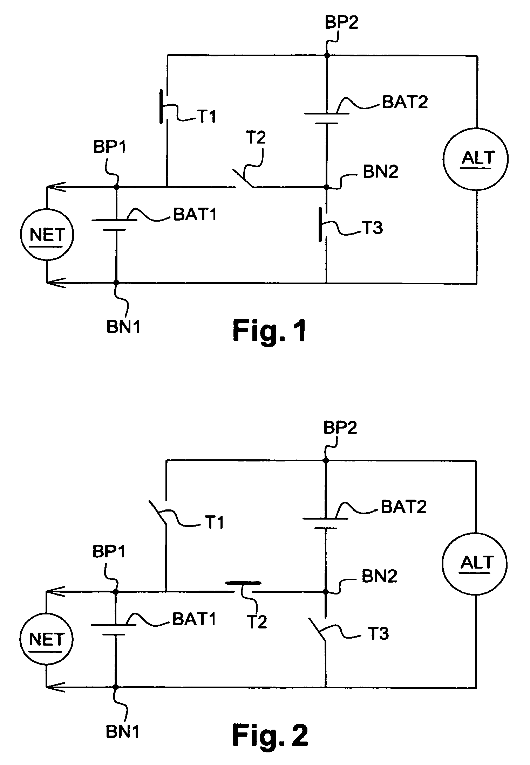

Les Fig.1 et Fig. 2 sont des schémas représentant respectivement un exemple de réalisation d'une mise en parallèle et série de deux unités de stockage telles que des batteries BAT pour un véhicule automobile. Bien entendu tout autre type d'unité de stockage peut être utilisé telle que des ultra capacités.
Une première batterie BAT1 est reliée à un réseau de bord du véhicule automobile, réseau de bord NET comprenant les consommateurs du véhicule tels que la climatisation, les feux de signalisation .... Une deuxième batterie BAT2 est reliée selon un premier exemple de réalisation Fig.1 en parallèle à la première batterie BAT1. Cette association permet de cumuler les réserves d'énergie à la tension de 12V. Cette association de batterie est associée à l'alternateur ALT.

L'alternateur ALT permet de transformer un mouvement de rotation du rotor inducteur, entraîné par le moteur thermique du véhicule, en un courant électrique induit dans les bobinages du stator.

L'alternateur peut aussi être réversible et constituer un moteur électrique, permettant d'entraîner en rotation, via l'arbre du rotor, le moteur thermique du véhicule. Cet alternateur réversible est appelé alternateur-démarreur ou encore alterno-démarreur. Il permet de transformer l'énergie mécanique en énergie électrique et vice versa. Ainsi, en mode alternateur, l'alterno-démarreur charge notamment la batterie du véhicule tandis qu'en mode démarreur l'alterno-démarreur entraîne le moteur thermique appelé également moteur à combustion interne, du véhicule automobile pour son démarrage.

Dans le cas où le véhicule comporte uniquement un alternateur classique, il comporte également un démarreur classique pour démarrer ledit moteur thermique.

Dans le reste de la description, on prendra comme exemple non limitatif la liaison à un alterno-démarreur ALT.

Dans l'exemple pris, trois interrupteurs T1, T2 et T3 sont utilisés pour la mise en série/parallèle des deux batteries BAT.

Le premier interrupteur T1 est connecté entre la borne positive BP1 de la première batterie BAT1 et la borne positive BP2 de la deuxième batterie BAT2.

Le deuxième interrupteur T2 est connecté entre la borne positive BP1 de la première batterie BAT1 et la borne négative BN2 de la deuxième batterie BAT2.

Le troisième interrupteur T3 est connecté entre la borne négative BN2 de la deuxième batterie BAT2 et la borne négative BN1 de la première batterie BAT1.

Pour la mise en parallèle des deux batteries, le premier interrupteur T1 et le troisième interrupteur T3 sont fermés tels que illustrés sur la Fig. 1, tandis que le deuxième interrupteur T2 est ouvert.

Pour la mise en série des deux batteries, le deuxième interrupteur T2 est fermé tandis que le premier T1 et troisième T3 interrupteurs sont ouverts tels qu'illustrés sur la Fig. 2.

Ainsi, lors du démarrage du moteur thermique (Fig. 2), on bénéficie d'une tension d'au moins 24V aux bornes de l'alterno-démarreur de sorte que le couple de celui-ci est augmenté. Le réseau de bord du véhicule NET reste alimenté sous 12V de part sa connexion à la batterie BAT1. Par ailleurs, lorsque le moteur thermique est démarré, les deux batteries sont connectés en parallèle (Fig.1), ce qui permet de cumuler les réserves d'énergie et donc d'obtenir une puissance électrique plus importante. Le réseau de bord NET est donc toujours alimenté sur 12V en général.

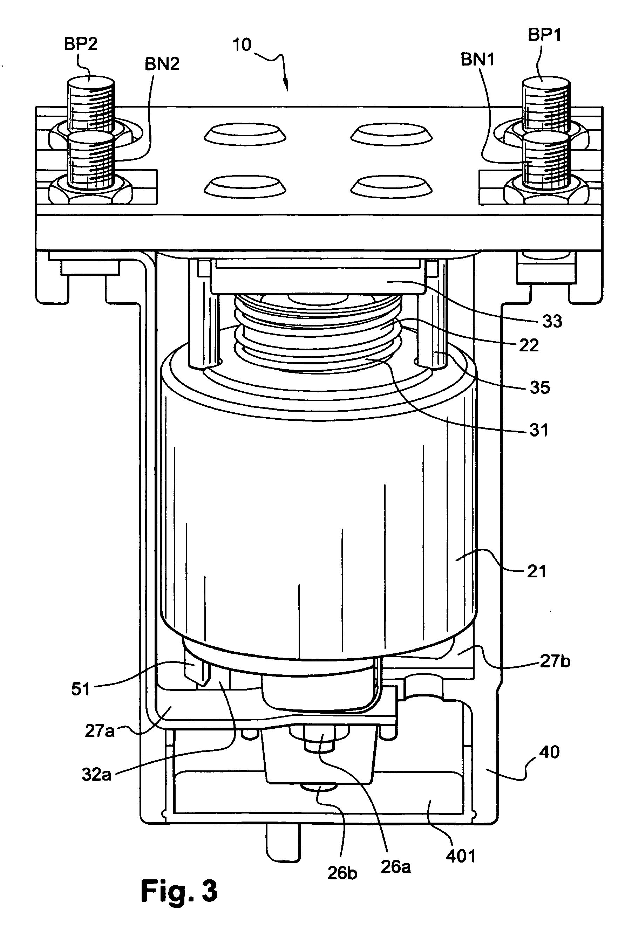

Afin de mettre en oeuvre ces associations de batteries (série/ parallèle), un commutateur de puissance 10 est utilisé. Un mode de réalisation non limitatif de ce commutateur 10 est illustré sur la Fig.3.

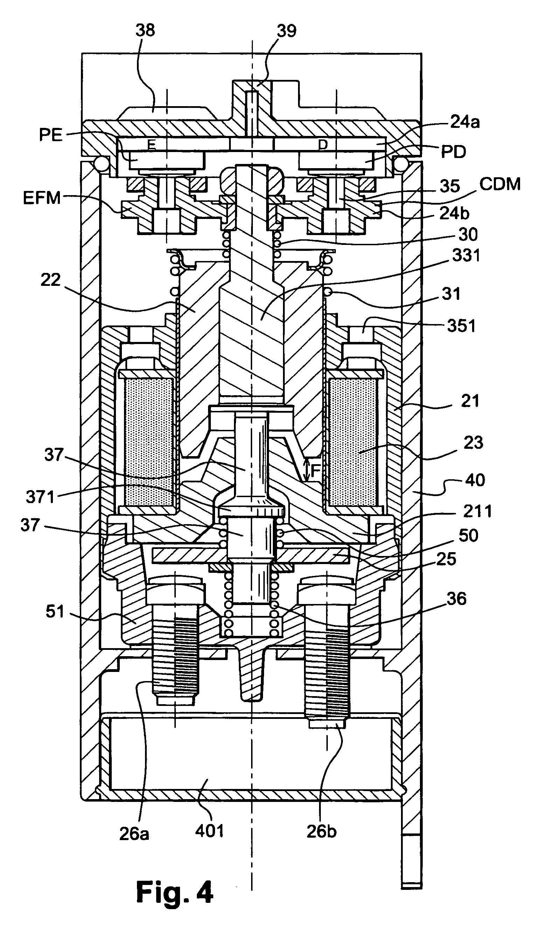

Ledit commutateur comprend :
- un contacteur électromagnétique 20 composé des éléments suivants :
   - une cuve 21 dans laquelle sont logés
      o un noyau mobile 22, et
      o une bobine disposée 23 coaxialement audit noyau mobile 22, bobine représentée à la Fig.4
- une partie fixe 211 appelée noyau fixe représenté à la Fig. 4.
- un boîtier étanche 40 comportant un capot protecteur 401.

Par ailleurs, comme illustré sur la coupe de la Fig.4, ledit contacteur 20 comporte également :
- un premier ensemble 24a de contacts et un deuxième ensemble 24b destinés à relier au moins deux batteries BAT1, BAT2 en parallèle au moyen de contacts CDM, EFM destinés à coopérer avec des bornes de même polarité BN1, BN2; BP1, BP2 des batteries respectivement, et
- un troisième ensemble 25 de contacts destiné à relier lesdites batteries BAT1, BAT2 en série au moyen de contacts destinés à coopérer avec une unique borne de polarité différente respective BP1, BN2 de chaque batterie.

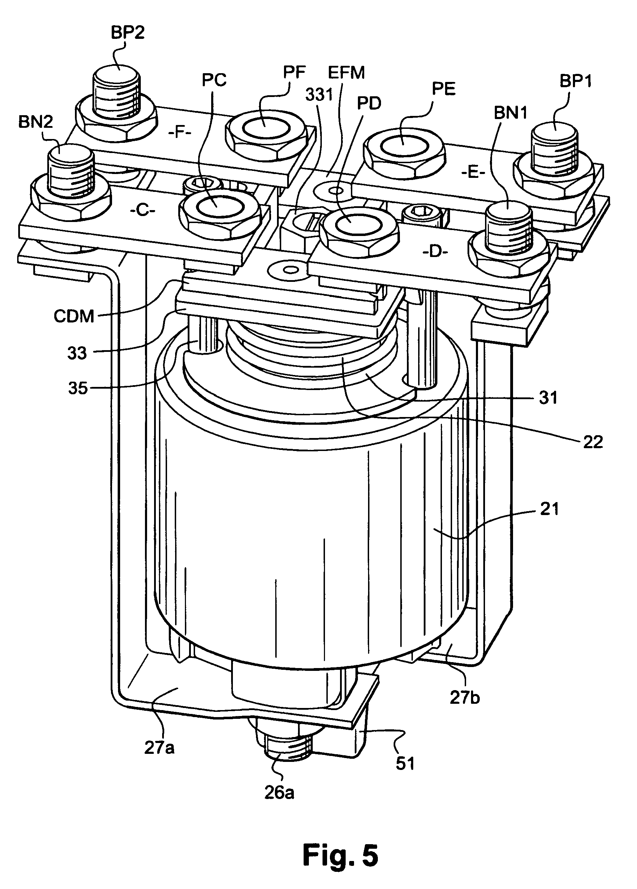

Selon un mode de réalisation non limitatif, le premier ensemble 24a de contacts est composé de contacts fixes C, D, E, F, et le deuxième ensemble 24b de contacts est composé de contacts mobiles CDM, EFM tel qu'illustré à la Fig.5.

Ainsi, les contacts du premier ensemble 24a sont reliés aux bornes positives et négatives des batteries, tandis que les contacts du deuxième ensemble 24b permettent de connecter lesdites bornes entre elles.

Plus particulièrement, les contacts fixes C, D, E et F sont conducteurs et reliés respectivement à :
- la borne négative BN2 de la deuxième batterie BAT2,
- la borne négative BN1 de la première batterie BAT1,
- la borne positive BP1 de la première batterie BAT1, et
- la borne positive BP2 de la deuxième batterie BAT2.

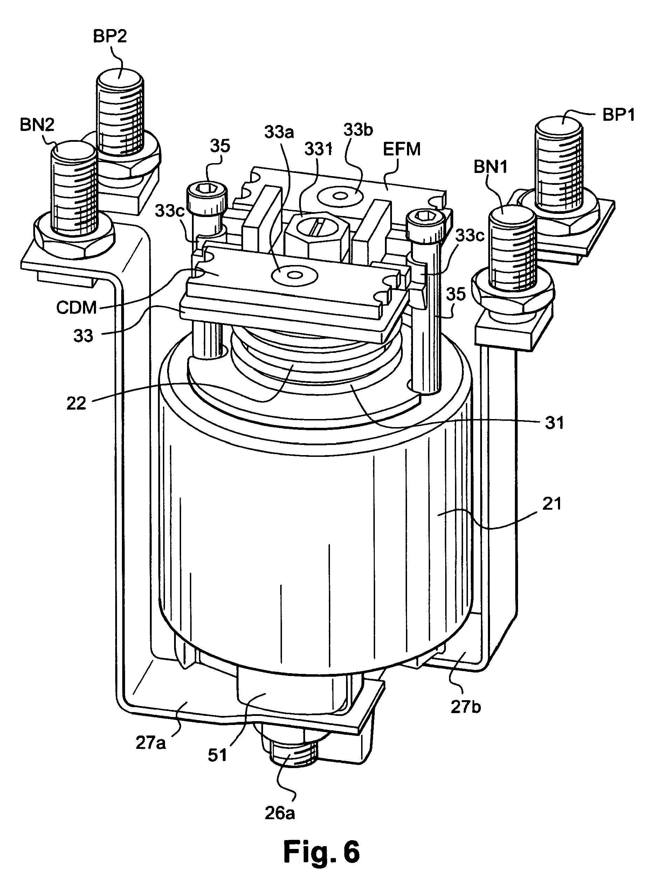

Dans un mode de réalisation non limitatif, les contacts fixes C, D, E et F sont des plaquettes conductrices et les contacts mobiles CDM et EFM sont des plaquettes conductrices tels qu'illustrés aux Fig.5 et 6.

On remarquera que les bornes des batteries illustrées sur la Fig. 4 sont en fait des bornes de fixation pour fixer les cosses de batteries.

Cependant, dans l'ensemble de la description, pour plus de commodité, on nommera une cosse de batterie par une borne de batterie.

Dans un mode de réalisation non limitatif, le troisième ensemble 25 de contacts est une plaquette conductrice.

Selon un mode de réalisation non limitatif, le contacteur 20 comporte en outre tel qu'illustré à la Fig. 4 :
- un plan 33 solidaire du noyau sur lequel est disposé le deuxième ensemble CDM, EFM de contacts mobiles, et
- une axe porte contact 37 sur lequel repose une extrémité du noyau mobile 22.

On notera qu'avantageusement, les contacts mobiles CDM et EFM sont solidaires du noyau mobile via ledit plan 33.

On notera qu'il existe un entrefer F entre une extrémité du noyau mobile 22 et la partie fixe 211 du contacteur traversée par l'axe porte contact 37 de sur lequel est monté la plaquette conductrice 25.

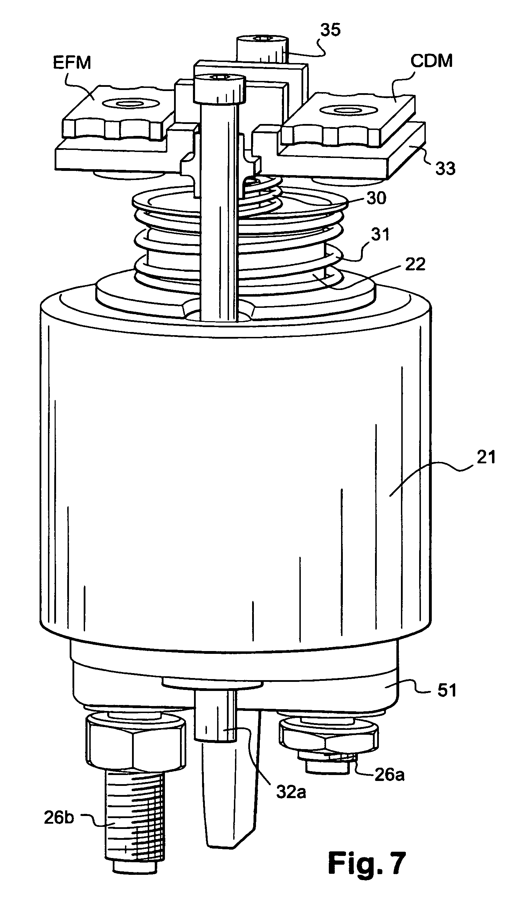

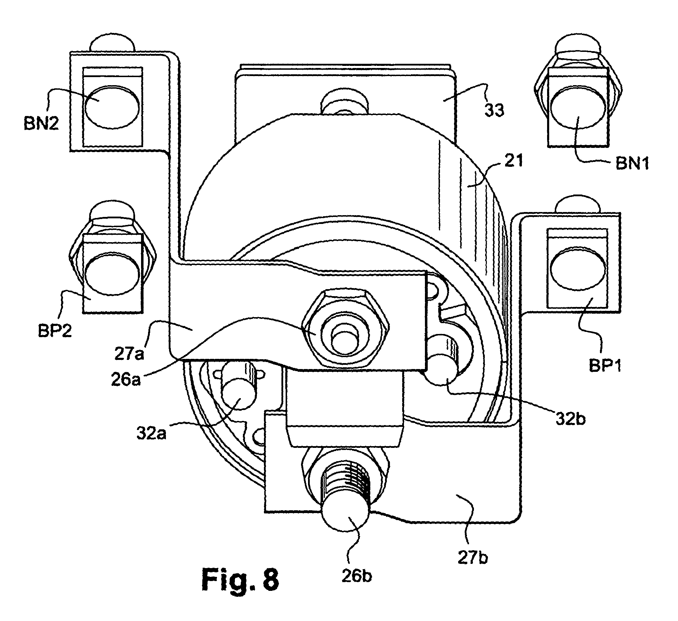

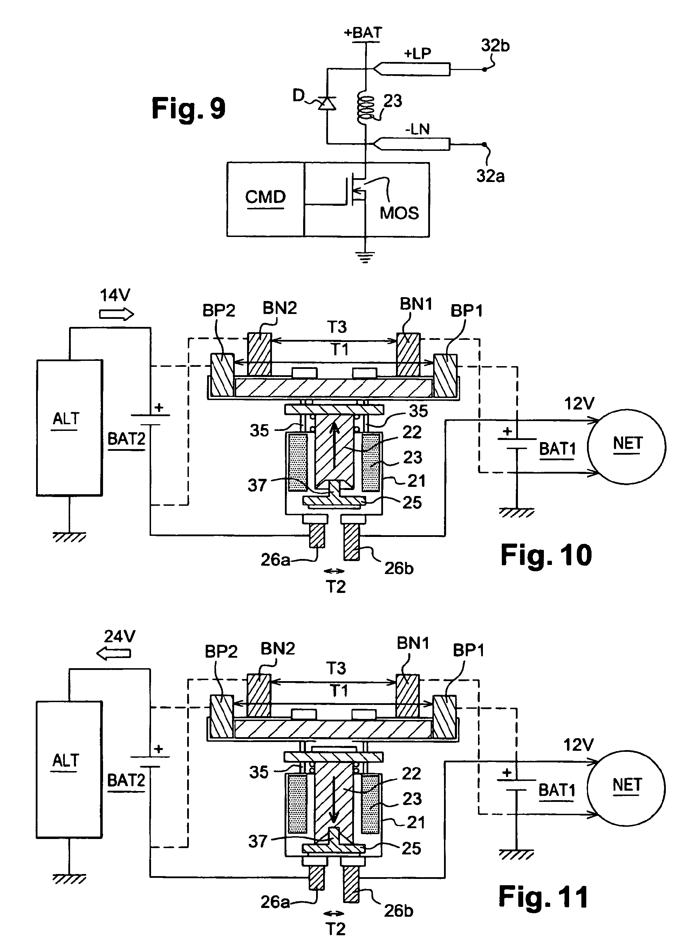

Selon un mode de réalisation non limitatif, le contacteur 20 comporte en outre :
- deux bornes 26a et 26b conductrices telles que montrées en particulier aux Fig.7 et 8,
- L'entrée 32a de la bobine 23 et sa sortie 32b permette de relier celle-ci à une électronique de commande CMD comme illustré Fig. 9 (bornes +Ln et -Ln). Ladite électronique de commande étant reliée à l'alterno-démarreur ALT dans l'exemple pris, et
- une chambre de contact 51 destinée à protéger les contacts de la plaquette conductrice 25 et les bornes 26a et 26b de sorte que l'ensemble soit étanche.

Par ailleurs, selon un mode de réalisation non limitatif, le commutateur 10 comporte en outre tel qu'illustré à la Fig. 8:
- un premier élément conducteur 27b reliant la première borne 26b du contacteur 20 à la borne positive BP1 de la première batterie BAT1,
- un deuxième élément conducteur 27a reliant la deuxième borne 26a du contacteur 20 à la borne négative BN2 de la deuxième batterie BAT2.

Dans un mode de réalisation non limitatif, les premier et deuxième éléments conducteurs 27a et 27b sont des bus barres couramment appelés en anglais « bar bus » tel qu'illustrés notamment sur la Fig.8.

Enfin, le contacteur 20 comporte, selon un mode de réalisation non limitatif, tel qu'illustré à la Fig. 4 :
- un ressort de rappel 36,
- un ressort de maintien 31 du noyau mobile 22, destiné à amortir les vibrations lorsque le véhicule est en marche ce qui évite une déconnexion (micro-coupures) entre les batteries (BAT1 et BAT2) et l'alterno-démarreur ALT fonctionnant en mode alternateur et donc fournissant de l'énergie électrique sur le réseau NET. Ce ressort de maintien 31 permet également d'éviter les contacts intempestifs entre la plaquette 25 et les bornes 26a et 26b causé par les vibrations créent par le véhicule en fonctionnement, et
- un ressort d'écrasement 50 situé entre la plaquette conductrice 25 et un rebord 371 de l'axe porte contact 37.

La mise en série/parallèle des deux batteries s'effectue de la manière suivante selon un mode de réalisation non limitatif.

Pour la suite de la description, on notera que le contacteur est dans une position de repos lorsque aucun courant ne circule dans ladite bobine, et dans une position active lorsqu'un courant circule dans ladite bobine,

La mise en parallèle s'effectue de la manière suivante.

En mode repos, lorsque le véhicule est à l'arrêt, ou après démarrage par l'alterno-démarreur, i.e. une fois que le moteur thermique a démarré, le noyau 22 et la bobine 23 du contacteur 20 sont au repos. Aucun courant ne circule dans la bobine 23. Le contact mobile CDM est en contact avec les contacts fixes C, D qui sont reliés aux bornes négatives BN1, BN2 des deux batteries BAT1, BAT2, tandis que le contact mobile EFM est en contact avec les contacts fixes E, F qui sont reliés aux bornes positives BP1, BP2 des deux batteries BAT1, BAT2 comme indiqué sur la Fig.5. Ainsi, les bornes négatives BN1 et BN2 des deux batteries sont reliées entre elles, et les bornes positives BP1, BP2 des deux batteries BAT1, BAT2 sont reliées entre elles, de sorte que la mise en parallèle est effective.

Par ailleurs, la plaquette conductrice 25 n'est pas connectée aux bornes 26a, 26b du contacteur 20.

La mise en série s'effectue de la manière suivante.

**Dans une première étape**, lors du démarrage, lorsque par exemple le moteur thermique est démarré à l'aide de l'alterno-démarreur ALT qui comporte la fonctionnalité connue de l'homme du métier d'arrét/redémarrage automatique appelée en anglais « start-stop », la commande CMD du commutateur 10, comme illustré dans la Fig. 9, permet l'établissement du courant provenant de la première batterie BAT1, celle connectée au réseau NET, dans la bobine 23 du contacteur électromagnétique. Le flux magnétique généré par la bobine 23 circule dans le circuit magnétique constitué par le noyau mobile 22, la cuve 21, la partie fixe 211 du contacteur et l'entrefer F. Ce circuit magnétique va tendre à se modifier en réduisant son entrefer. Ainsi une force d'origine magnétique se crée dans le sens du flux et attire le noyau mobile 22 contre la partie fixe 211. Cette mise en translation du noyau mobile permet d'entraîner l'axe porte contact 37 du contacteur en translation vers les bornes 26a, 26b à l'encontre du ressort de rappel 36 et du ressort de maintien 31. Ledit axe porte contact 37 appuie sur le ressort d'écrasement 50 via son rebord 371. Ledit ressort d'écrasement 50 entraîne alors la plaquette conductrice 25 en translation de sorte que cette dernière entre en contact vers les bornes 26a et 26b. Le contact électrique entre les bornes 26a et 26b est ainsi crée au travers de la plaquette 25. Après que le contact est établi entre la plaquette conductrice 25 et les bornes 26a et 26b, le noyau mobile 22 continue sa course jusqu'au collage magnétique contre le noyau fixe 211 de sorte que l'entrefer F devienne nul.

Ainsi, lors de la mise en série, le noyau mobile 22 entraîne les contacts mobiles CDM et EFM en translation, de sorte qu'ils ne sont plus en contacts avec les contacts fixes C, D et E, F respectivement, lesdits contacts mobiles CDM et EFM étant solidaires dudit noyau. Comme décrit précédemment, les contacts mobiles sont solidaires du noyau 22 grâce au plan 33, ce dernier étant fixé sur le noyau 22 via des moyens de fixation telle qu'une vis 331 représentée à la Fig.6.

De plus, la borne BN2 de la deuxième batterie BAT2 qui est reliée à la borne 26a du contacteur 20 via le bus bar 27a est connectée à la borne BP1 de la première batterie BAT1 qui est reliée à la borne 26b du contacteur 20 via le bus bar 27b. Les deux bornes 26a et 26b sont alors connectées ensemble par l'intermédiaire de ladite plaquette 25. Les deux batteries sont donc connectées en série. On notera que le ressort d'écrasement 50 présente l'avantage selon lequel il permet d'écraser la plaquette mobile 25 contre les bornes 26a et 26b quand le noyau mobile 22 a terminé sa course, et il évite des rebonds du contact et joue donc un rôle d'amortisseur.

On notera que l'alterno-démarreur ALT commande avantageusement via une électronique de commande CMD l'activation de l'alimentation de la bobine 23 de sorte que du courant est envoyé ou non dans la bobine 23. Par ailleurs, on notera que la bobine 23 est reliée par une extrémité à la première borne BP1 de la première batterie via un élément connecteur 32b, et par l'autre extrémité à l'électronique de commande CMD via la sortie de commande 32a comme indiqué sur la Fig.8.

Dans un mode de réalisation non limitatif, une telle électronique de commande CMD est illustrée à la Fig.9. Elle comporte, selon un mode de réalisation non limitatif:
- un transistor de puissance MOS relié entre la masse et une extrémité de la bobine 23, et
- une diode de roue libre D qui protège le transistor MOS contre les surtensions lorsque l'on coupe le courant dans la bobine 23 du contacteur 20.

Ces deux éléments D et MOS peuvent être intégrés ou non dans l'unité de contrôle CMD de l'alterno-démarreur ALT qui commande l'ouverture/fermeture du transistor MOS de sorte que du courant circule ou non dans la bobine 23.

Par ailleurs, on notera également que selon la distance E de l'entrefer F entre le noyau 22 et la plaquette conductrice 25, il faut plus ou moins de courant I pour entraîner ledit noyau 22 et pour que la plaquette 25 entre en contact avec les bornes 26a et 26b du contacteur 20.

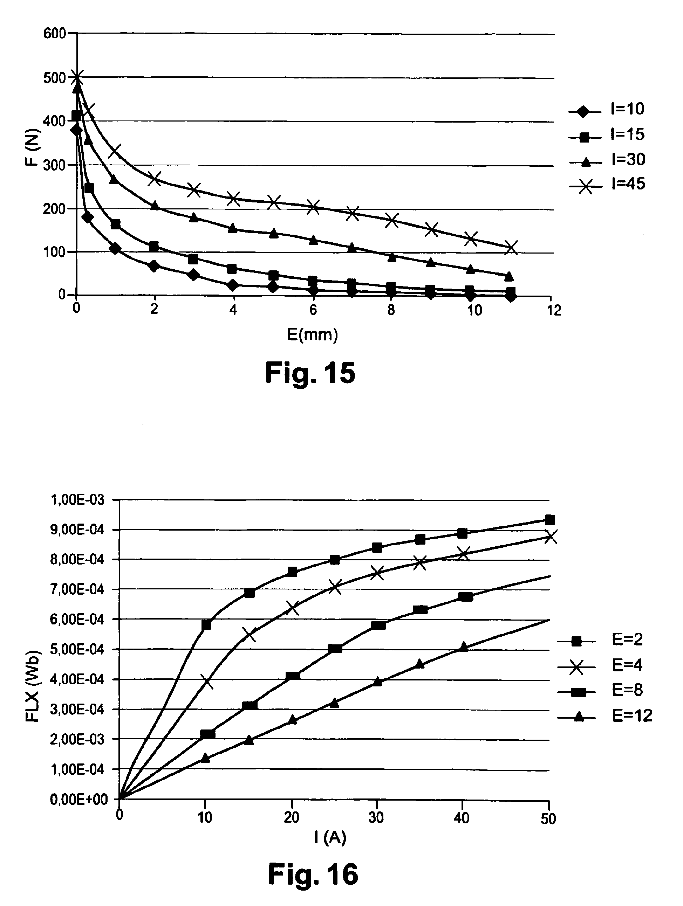

Ainsi, selon un exemple de réalisation non limitatif illustré aux Fig. 15 et 16, pour un entrefer E de 4mm, il faut une force électromagnétique F de 100N correspondant à un courant I de 15A dans la bobine 23 pour déplacer le noyau mobile 22, soit un flux magnétique FLX de 0,48mWb. Par contre, pour un entrefer de 12mm, pour obtenir la même force électromagnétique F de 100N, il faut un courant I de 40A, soit un flux magnétique FLX de 0,44mWb.

On notera qu'en réduisant l'entrefer, on a besoin de moins de courant pour déplacer la masse du noyau mobile 22. Bien entendu, on peut également avoir un entrefer de 12mm et appliquer un courant plus fort si on le désire. Un avantage supplémentaire d'avoir un entrefer petit est d'obtenir une électronique de commande CMD plus petite, le courant dans la bobine 23 du contacteur 20 étant déterminant pour le dimensionnement de ladite électronique de commande CMD, c'est-à-dire que l'on a des composants de puissance plus faibles. Par conséquent, on a un avantage en terme de coût économique et moins de problème de pertes.

On notera par ailleurs que afin de diminuer la distance E de l'entrefer F, les ressorts suivants sont, selon un mode de réalisation non limitatif, comprimés environ de moitié en mode repos :
- le ressort de rappel 36, le ressort de maintien 31 et les moyens d'amortissement 30.

Le fait que le ressort de maintien 31 soit comprimé de moitié présente un avantage supplémentaire selon lequel une force supplémentaire est appliquée sur les contacts mobiles CDM, EFM qui permet que le contact soit bien établi entre lesdits contacts et les contacts fixes C, D-E, F associés.
Ainsi, en jouant sur l'entrefer, cela permet de régler le courant I d'appel de la bobine pour coller les contacts et également de régler la distance d'isolement entre les contacts.

**Dans une deuxième étape,** lorsque le démarrage est effectif (le moteur thermique tourne), la bobine 23 n'est plus alimentée, de sorte que le noyau 22 est renvoyé à sa position initiale de repos, sous l'action du ressort de rappel 36 et du ressort de maintien 31.

On notera que le circuit de commande de l'alterno-démarreur ALT arrête le courant circulant dans la bobine 23 via l'électronique de commande CMD. On notera également que cette électronique de commande CMD peut être intégrée dans le capot 401 ou être déportée dans le circuit de commande de l'alterno-démarreur ALT.

Ainsi, avantageusement, un unique moyen, le commutateur 10 comprenant le contacteur 20, est utilisé pour la mise en série/parallèle des deux batteries BAT1 et BAT2 au lieu de plusieurs relais ou une multitude de transistors et d'électroniques de commande associées. Ledit commutateur 10 de puissance comprend ainsi au moins un premier T1 et un deuxième interrupteur T2, le premier interrupteur T1 étant destiné à être fermé en position de repos, et le deuxième interrupteur T2 étant destiné à être ouvert en position de repos. Le contacteur comporte en outre un troisième interrupteur T3, ledit interrupteur étant destiné à être fermé en position de repos. Le premier T1 et troisième interrupteurs T3 sont composés de :
- un premier ensemble de contacts fixes,
- un deuxième ensemble de contacts mobiles destinés à entrer en contact avec des contacts du premier ensemble de contacts fixes.
Le deuxième interrupteur T2 est composé d'un troisième ensemble de contacts destinés à connecter une première et deuxième bornes du contacteur.

Ainsi, les trois interrupteurs ont des contacts indépendants.

Cela permet, si le deuxième interrupteur T2 est cassé (la plaquette 25 ne peut plus entrer en contact avec les contacts 26a, 26b) d'avoir toujours une mise en parallèle des batteries et donc d'obtenir ici toujours 12V sur le réseau.

Ainsi, comme on peut le voir sur la Fig. 10, l'ensemble premier ensemble 24a - deuxième ensemble 24b de contacts - bornes des deux batteries gèrent la fonction du premier transistor T1 et du troisième transistor T3, tandis que l'ensemble plaquette conductrice 25 - bornes 26a et 26b - éléments conducteurs 27a, 27b gèrent la fonction du deuxième transistor T2.

Plus particulièrement, la fonction du premier transistor T1 est gérée par les deux bornes positives BP1, BP2 des deux batteries via les contacts fixes E, F et la deuxième plaquette conductrice mobile EFM, tandis que la fonction du troisième transistor T3 est gérée par les deux bornes négatives BN1, BN2 des deux batteries BAT1, BAT2 via les contacts fixes C, D et la première plaquette conductrice mobile CDM.

On notera que sur la Fig.10, les batteries sont en parallèle tandis que sur le schéma de la Fig.11, les batteries sont en série.

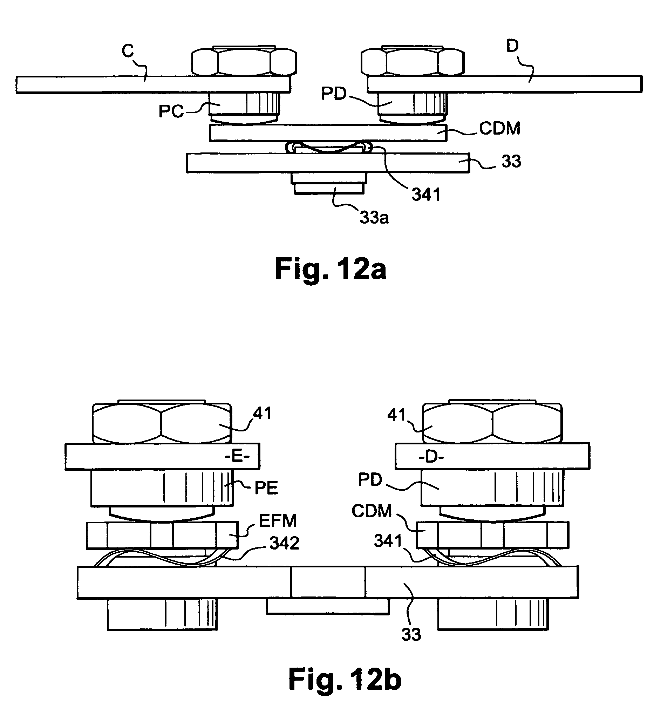

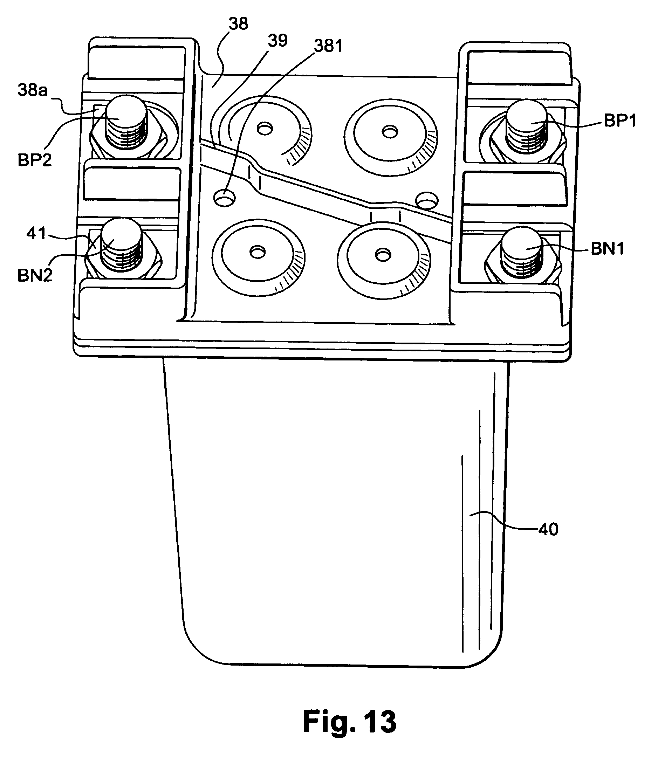

Enfin, dans des modes de réalisation non limitatifs, le contacteur 20 comporte les éléments supplémentaires suivants :
- des moyens d'amortissement 30 destiné à amortir des rebonds entre le premier ensemble 24a de contacts fixes C, D, E, F et le deuxième ensemble 24b de contacts mobiles CDM, EFM, tels qu'illustrés à la Fig.7,
- un guide anti-pivotement 35, tel qu'illustré aux Fig.6 et 7, du noyau mobile 22 destiné à maintenir le noyau 22 et le deuxième ensemble de contacts mobiles CDM-EFM afin qu'ils ne pivotent pas de 90° notamment, en vue d'éviter des courts-circuits entre les deux batteries BAT. Selon un mode de réalisation non limitatif, il existe deux guides anti-pivotement 35 ;
- des bornes de contact PC, PD, PE, PF associés à chaque contact fixe C, D, E, F respectivement, tels qu'illustrés aux Fig.5, 12a et 12b, de manière à créer le contact électrique entre le premier ensemble 24a de contacts C, D, E, F et le deuxième ensemble 24b de contacts CDM, EFM. Ces bornes de contact permettent d'assurer un bon contact électrique ;
- des moyens de débattement angulaires 34 associés auxdits contacts mobiles CDM, EFM et disposés entre lesdits contacts CDM, EFM et ledit plan 33, tels qu'illustrés à la Fig.12a (référence 341) ou 12b (référence 341, 342) ;
- un surmoulage 38 destiné à recouvrir le premier et deuxième ensembles 24a et 24b de contacts tel qu'illustré à la Fig. 13;
- un renfort 39 sur le surmoulage 38 tel qu'illustré à la Fig. 13.

Sur la Fig. 7, les moyens d'amortissement 30 sont dans un mode de réalisation non limitatif un ressort fixé par une extrémité sur le plan 33 le noyau mobile 22. Ils permettent d'amortir le choc quand les contacts mobiles CDM et EFM entrent en contact respectivement avec les contacts fixes (C, D), et (E, F).

Sur la Fig. 6, les guides anti-pivotement 35 sont, dans un mode de réalisation non limitatif, des tiges fixées sur la cuve 21 du contacteur par une extrémité et maintenues par des glissières du plan 33c. Ils viennent se fixer, selon un mode de réalisation non limitatif, dans des trous de fixation 351 tels qu'illustrés à la Fig. 4, lesdits trous étant dans un contacteur de démarreur classique utilisés pour fixer le contacteur sur le démarreur. Ainsi, ces guides maintiennent à la fois le noyau mobile et les contacts mobiles CDM, EFM de sorte que l'ensemble ne peut sous l'effet de vibrations par exemple bouger et pivoter en particulier à 90°. Un tel pivotement à 90° serait préjudiciable car les deux contacts mobiles CDM et EFM viendraient en contact respectivement avec les bornes négatives et positives BN1-BP1 et BN2-BP2 ce qui court-circuiterait les deux batteries BAT1 et BAT2.

Sur les Fig.12a et 12b, les moyens de débattement angulaires 34 sont disposés autour de moyens de fixation 33a, lesdits moyens de fixation permettant d'une part de fixer les contacts mobiles CDM et EFM au plan 33, et d'autre part au noyau 22, lesdits moyens étant par exemple des vis ou rivets. Dans un mode de réalisation non limitatif, les moyens de débattement angulaires 34 sont des ressorts ondulés 341 et 342 respectivement associés aux contacts mobiles CEM et EFM tels qu'illustrés à la Fig. 12b. Ces ressorts ondulés permettent d'avoir un contact plan entre les points de contacts (PC, PD) et (PE, PF) et respectivement les contacts mobiles CDM et EFM. Lesdits ressorts sont flexibles et permettent de rattraper tous les jeux sur l'assemblage des contacts.

Sur la Fig. 13, le surmoulage plastique 38 s'étend sur le premier ensemble 24 de contacts. De plus, il existe des évidements 38a dans ledit surmoulage pour laisser passer les bornes BN et BP des deux batteries BAT. Le surmoulage 38 est fixé au moyen de deux vis 381 qui s'insèrent dans les guides anti-pivotement 35, et au moyen d'écrous 41 qui fixent les bornes des batteries BAT. La fonction du surmoulage 38 est notamment de maintenir le premier ensemble 24a et deuxième ensemble 24b de contacts fixes et mobiles, de les isoler par rapport à l'humidité par exemple, et d'éviter un court-circuit batterie si une pièce métallique vient à tomber sur les bus bar par exemple. En outre, le surmoulage 38 comporte un renfort 39 qui permet de rigidifier ledit surmoulage 38. Le surmoulage 38 des contacts fixes C, D, E et F, est ainsi capable de supporter les chocs mécaniques issus du noyau mobile 22 lorsque ce dernier vient « cogner » sur les contacts fixes via les contacts mobiles CDM, EFM lorsqu'il n'y a plus de courant dans la bobine 23.

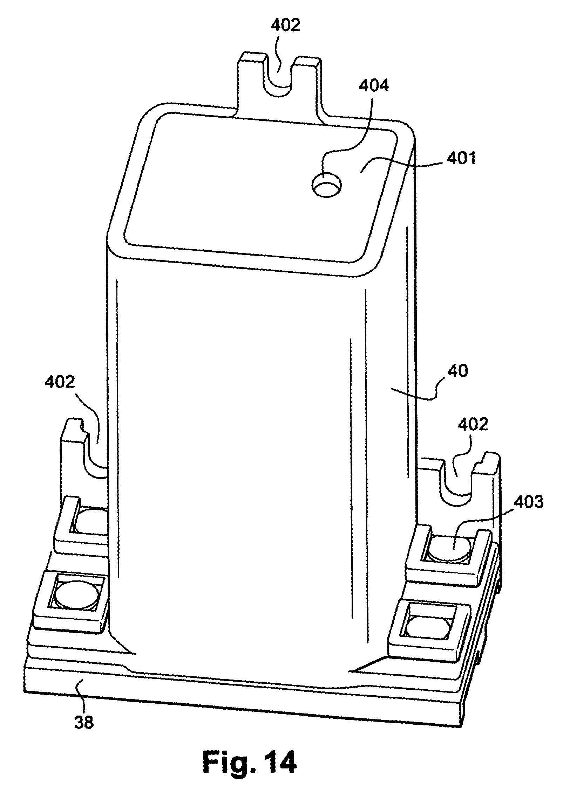

Enfin, comme indiqué sur la Fig. 14, l'ensemble du commutateur 10 se loge dans un boîtier étanche 40 comportant :
- un capot 401 pour fermer l'ensemble du boîtier,
- des moyens de fixation 402 sur la carrosserie du véhicule automobile,
- des évidements 403 pour chaque borne BN, BP de chaque batterie BAT, et
- un évidement 404 dans le capot 401 pour la connexion de la sortie de commande 32a.

On notera que les bus bars 27a et 27b sont surmoulés dans le boîtier étanche 40, ce qui permet une bonne tenue mécanique desdits bus bars et une bonne étanchéité et protection contre les corrosions.

Bien entendu, le commutateur 10 selon l'invention ne s'applique pas uniquement pour mettre en série deux batteries.

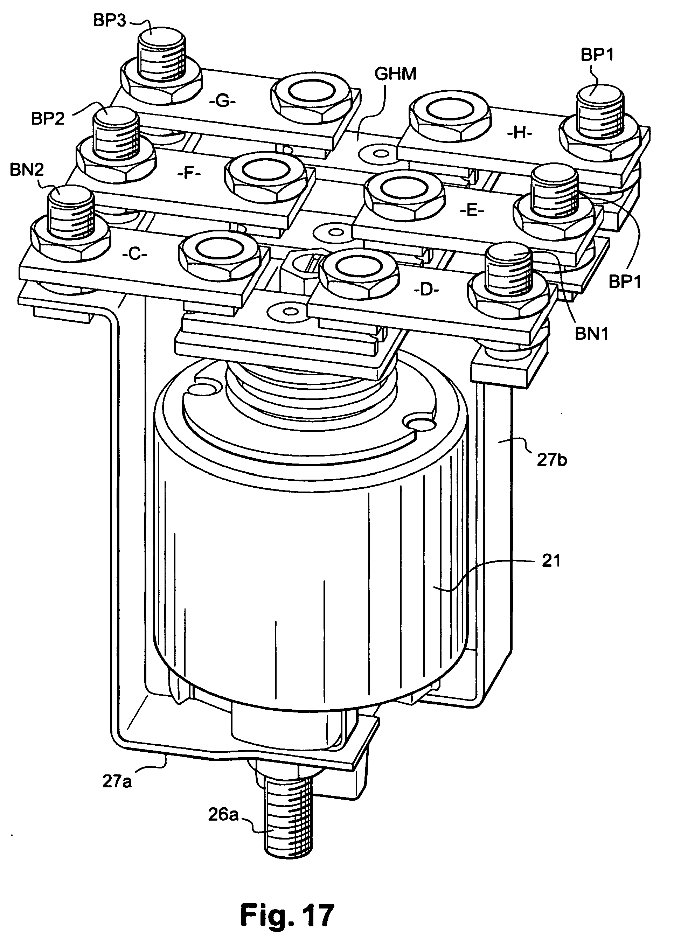

Il peut être utilisé non seulement pour deux batteries, mais également pour la mise en parallèle de plus de deux batteries. Par exemple, si on veut mettre en parallèle une troisième batterie BAT3, il suffit d'ajouter, comme illustré à la Fig. 17, un contact mobile GHM destiné à entrer en contact avec des contacts fixes G et H reliés respectivement aux bornes positive BP1 de la première batterie BAT1 et BP3 de la troisième batterie BAT3. Une connexion entre les bornes négatives BN3 de la batterie BAT3 et BN1 de la batterie BAT1 doit également être réalisé par un câble par exemple. On notera que pour permettre un équilibre des contacts mobiles, on pourra prévoir d'allonger le plan 33 du côté opposé au contact mobile GHM.

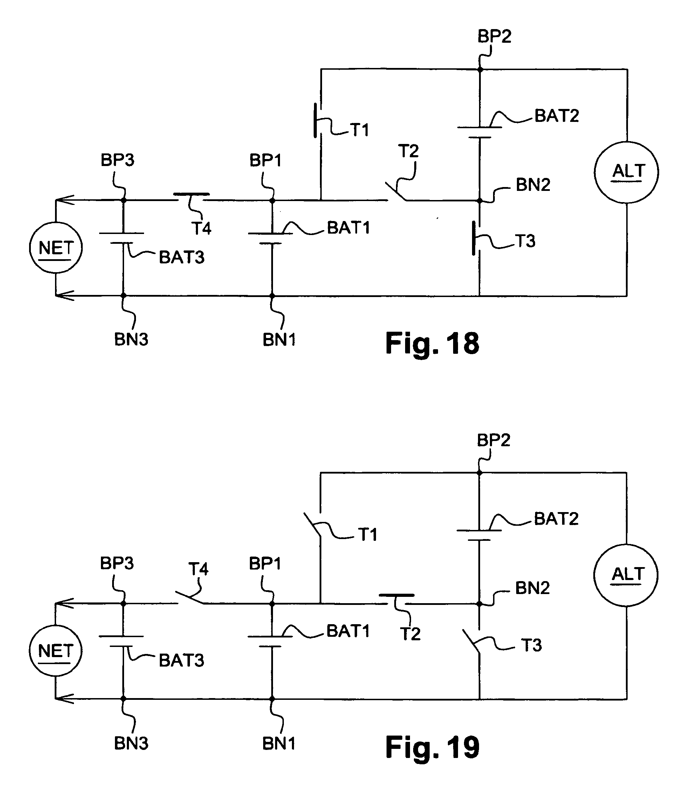

Pour la mise en série, les deux premières batteries BAT1 et BAT2 sont mises en série comme décrit précédemment, ces deux batteries servant uniquement à alimenter l'alterno-démarreur à 24V en mode démarrage et la troisième batterie BAT3 servant à alimenter le réseau de bord NET. Ainsi, le commutateur 10 trouve une autre application que dans l'architecture 12+12. Cette troisième batterie BAT3 sert ainsi à alimenter en 12V les organes du véhicule sensibles aux variations de tension des batteries occasionnée lors du démarrage ou redémarrage du moteur thermique par la mise en oeuvre d'un système d'alterno-démarreur. Ainsi le commutateur 10 dans cette application avec trois batteries permet de séparer le réseau de bord NET du réseau de puissance qui alimente le système d'alterno-démarreur ALT lorsque celui-ci fonctionne en mode moteur (Fig.19). En mode alternateur (Fig.18), les trois batteries sont en parallèles et sont rechargées. Le commutateur 10 permet ici de mettre en oeuvre quatre interrupteurs T1, T2, T3 et T4, le quatrième interrupteur T4 étant situé entre les bornes positives BP1, BP3 respectives de la première batterie BAT1 et de la troisième batterie BAT3 et étant fermé pour le mode alternateur et ouvert pour le mode moteur.

Bien entendu, l'invention ne se limite pas à la mise en série/parallèle de plusieurs batteries. On comprendra bien que le commutateur de puissance selon l'invention peut s'appliquer à toute autre application dans laquelle plusieurs interrupteurs sont nécessaires, par exemple lors de l'utilisation de deux batteries de tensions différentes pour un réseau bitension.

## Revendications

1. Système de démarrage et de génération électrique comprenant:
- au moins deux unités de stockage d'énergie,
- une machine électrique tournante (ALT),
- un commutateur de puissance comportant un contacteur électromagnétique (20), ledit contacteur comprenant :
o un noyau mobile (22),
o une bobine (23) disposée coaxialement audit noyau mobile (22),
o un premier et deuxième ensembles de contacts (24a, 24b) destinés à relier au moins deux unités de stockage en parallèle au moyen de contacts associés destinés à coopérer avec chaque borne (BN1, BN2, BP1, BP2) des unités de stockage respectivement lors du mode générateur,
o un troisième ensemble de contacts (25) destiné à relier deux unités de stockage en série au moyen de contacts destinés à coopérer avec une borne de polarité différente respective (BP1, BN2) de chaque unité de stockage lors du mode moteur,
- ladite mise en série étant activée lorsqu'un courant circule dans ladite bobine (23),
cacartérisé en ce que ladite machine électrique tournante (ALT) est une machine réversible fonctionnant en mode générateur pour alimenter au moins une unité de stockage et en mode moteur pour démarrer un moteur thermique, ladite machine (ALT) étant reliée à une borne de polarité différente respective (BN1, BP2) de chaque unité de stockage.

2. Système selon la revendication 1, **caractérisé en ce qu'**il comprend un contacteur (20) électromagnétique comprenant :
- au moins un premier (T1), un deuxième interrupteur (T2), et un troisième interrupteur (T3)
- ledit contacteur (20) étant dans une position de repos lorsque aucun courant ne circule dans ladite bobine (23), et dans une position active lorsqu'un courant circule dans ladite bobine (23),
- au moins un des premier et deuxième interrupteurs étant destiné à être fermé en position de repos, et
- le troisième interrupteur (T3). étant destiné à être fermé en position de repos.

3. Système selon l'une quelconque des revendications précédentes, ***caractérisé en ce qu*'**un interrupteur (T1, T3) destiné à être ouvert en position de repos est composé de :
- un premier ensemble (24a) de contacts (C, D, E, F),
- un deuxième ensemble (24b) de contacts (CDM, EFM) destinés à entrer en contact avec des contacts (C, D ; E, F) du premier ensemble de contacts.

4. Système selon l'une quelconque des revendications précédentes, ***caractérisé en ce que*** le deuxième interrupteur (T2) est composé de :
- un troisième ensemble de contacts (25) destinés à connecter une première et une deuxième bornes (26a, 26b) du contacteur (20).

5. Système selon l'une quelconque des revendications précédentes, ***caractérisé en ce que*** ledit deuxième ensemble (24b) de contacts (CDM, EFM) est solidaire du noyau (22).

6. Système selon l'une quelconque des revendications 3 à 5 , ***caractérisé en ce que*** les contacts (C, D, E, F) du premier ensemble de contacts (24a) sont destinés à être reliés à des bornes (BN1, BN2, BP1, BP2) d'unités de stockage.

7. Système selon l'une quelconque des revendications 3 à 6 , ***caractérisé en ce que*** le deuxième ensemble (24b) de contacts (CDM, EFM) est disposé sur un plan (33) solidaire du noyau (22), et **en ce que** le contacteur (20) comporte en outre des moyens de débattement angulaires (34) associés auxdits contacts (CDM, EFM) disposés entre lesdits contacts (CDM ; EFM) et ledit plan (33).

8. Système selon l'une quelconque des revendications 3 à 7 , ***caractérisé en ce que*** le contacteur (20) comporte en outre:
- des moyens d'amortissement (30) destinés à amortir des rebonds entre le premier ensemble de contacts (C, D, E, F) et le deuxième ensemble de contacts (CDM, EFM).

9. Système selon l'une quelconque des revendications précédentes, ***caractérisé en ce qu'**il* comporte en outre :
- un premier élément conducteur (27b) reliant une première borne (26b) du contacteur (20) à une première borne (BP1) d'une première unité de stockage (BAT1),
- un deuxième élément conducteur (27a) reliant une deuxième borne (26a) du contacteur (20) à une deuxième borne (BN2) d'une deuxième unité de stockage (BAT2).

10. Système selon l'une quelconque des revendications précédentes, ***caractérisé en ce que*** le contacteur (20) comporte en outre un ressort de maintien (31) du noyau mobile (22).

11. Système selon l'une quelconque des revendications précédentes, ***caractérisé en ce que*** le contacteur (20) comporte en outre une sortie de commande (32a) reliant la bobine (23) à une électronique de commande (CMD).

12. Système selon l'une quelconque des revendications précédentes, ***caractérisé en ce que*** le contacteur (20) comporte en outre un guide anti-pivotement (35) du noyau mobile (22).

13. Système selon l'une quelconque des revendications précédentes, ***caractérisé en ce que*** le contacteur (20) comporte en outre un entrefer (F) de distance (E) comprise dans la plage de valeurs 1,5mm à 4mm.

14. Système selon l'une quelconque des revendications précédentes, ***caractérisé en ce que*** les contacts (C, D, E, F) du premier ensemble (24a) de contacts sont fixes.

15. Système selon l'une quelconque des revendications précédentes, ***caractérisé en ce que*** les contacts (CDM, EFM) du deuxième ensemble (24b) de contacts sont mobiles.

16. Système selon l'une quelconque des revendications précédentes, ***caractérisé en ce que*** le contacteur (20) électromagnétique comprend en outre :
- un quatrième interrupteur (T4) destiné à être fermé en position de repos.

## Claims

1. System for starting and electric generation, comprising:
- at least two energy storage units:
- a rotary electrical machine:
- a power switch comprising an electromagnetic contactor (20), the said contactor comprising:
o a mobile core (22);
o a coil (23) which is arranged coaxially to the said mobile core (22);
o a first and second assembly of contacts (24a, 24b) which are designed to connect at least two storage units in parallel by means of associated contacts which are designed to co-operate with each terminal (BN1, BN2, BP1, BP2) of the storage units respectively during the generator mode;
o a third assembly of contacts (25) which is designed to connect two storage units in series, by means of contacts which are designed to co-operate with a terminal (BP1, BN2) with a respective different polarity of each storage unit during the engine mode,
- the said putting into series being activated when a current is circulating in the said coil (23),
**characterised in that** the said rotary electrical machine (ALT) is a reversible machine which functions in generator mode in order to supply at least one storage unit, and in engine mode in order to start a thermal engine, the said machine (ALT) being connected to a terminal (BN1, BP2) with a respective different polarity of each storage unit.

2. System according to claim 1, **characterised in that** it comprises an electromagnetic contactor (20) comprising:
- at least a first (T1) and a second (T2) switch, and a third switch (T3);
- the said contactor (20) being in a position of rest when no current is circulating in the said coil (23), and in an active position when a current is circulating in the said coil (23);
- at least one of the first and second switches being designed to be closed in the position of rest; and
- the third switch (T3) being designed to be closed in the position of rest.

3. System according to either of the preceding claims, **characterised in that** a switch (T1, T3) which is designed to be open in the position of rest consists of:
- a first assembly (24a) of contacts (C, D, E, F);
- a second assembly (24b) of contacts (CDM, EFM), which are designed to come into contact with contacts (C, D; E, F) of the first assembly of contacts.

4. System according to any one of the preceding claims, **characterised in that** the second switch (T2) consists of:
- a third assembly of contacts (25), which are designed to connect a first and a second terminal (26a, 26b) of the contactor (20).

5. System according to any one of the preceding claims, **characterised in that** the said second assembly (24b) of contacts (CDM, EFM) is integral with the core (22).

6. System according to any one of claims 3 to 5, **characterised in that** the contacts (C, D, E, F) of the first assembly of contacts (24a) are designed to be connected to terminals (BN1, BN2, BP1, BP2) of storage units.

7. System according to any one of claims 3 to 6, **characterised in that** the second assembly (24b) of contacts (CDM, EFM) is arranged on a plane (33) which is integral with the core (22), and **in that** the contactor (20) additionally comprises means (34) for angular clearance which are associated with the said contacts (CDM, EFM) arranged between the said contacts (CDM; EFM) and the said plane (33).

8. System according to any one of claims 3 to 7, **characterised in that** the contactor (20) additionally comprises:
- damping means (30) which are designed to damp rebounds between the first assembly of contacts (C, D, E, F) and the second assembly of contacts (CDM, EFM).

9. System according to any one of the preceding claims, **characterised in that** it additionally comprises:
- a first conductor element (27b), which connects a first terminal (26b) of the contactor (20) to a first terminal (BP1) of a first storage unit (BAT1);
- a second conductor element (27a), which connects a second terminal (26a) of the contactor (20) to a second terminal (BN2) of a second storage unit (BAT2).

10. System according to any one of the preceding claims, **characterised in that** the contactor (20) additionally comprises a spring (31) for retention of the mobile core (22).

11. System according to any one of the preceding claims, **characterised in that** the contactor (20) additionally comprises a control output (32a), which connects the coil (23) to an electronic control unit (CMD).

12. System according to any one of the preceding claims, **characterised in that** the contactor (20) additionally comprises an anti-pivoting guide (35) for the mobile core (22).

13. System according to any one of the preceding claims, **characterised in that** the contactor (20) additionally comprises a distance (E) air gap (F), which is contained in the range of values from 1.5 mm to 4 mm.

14. System according to any one of the preceding claims, **characterised in that** the contacts (C, D, E, F) of the first assembly (24a) of contacts are fixed.

15. System according to any one of the preceding claims, **characterised in that** the contacts (CDM, EFM) of the second assembly (24b) of contacts are mobile.

16. System according to any one of the preceding claims, **characterised in that** the electromagnetic contactor (20) additionally comprises:
- a fourth switch (T4), which is designed to be closed in the position of rest.

## Patentansprüche

1. Elektrisches Start- und Generatorsystem, das
- mindestens zwei Energiespeichereinheiten,
- eine drehende elektrische Maschine,
- und einen Leistungsschalter umfasst, der ein elektromagnetisches Schütz (20) umfasst, das
o einen beweglichen Kern (22),
o eine Spule (23), die koaxial zu dem besagten beweglichen Kern (22) angeordnet ist,
o eine erste und eine zweite Gruppe von Kontakten (24a, 24b) zur parallelen Verbindung von mindestens zwei Speichereinheiten mittels zugeordneter Kontakte umfasst, die im Generatorbetrieb mit jeder Klemme (BN1, BN2, BP1, BP2) der entsprechenden Speichereinheiten zusammenwirken,
o und eine dritte Gruppe von Kontakten (25) zur Verbindung von zwei Speichereinheiten in Reihe mittels Kontakten umfasst, die im Motorbetrieb mit einer entsprechenden Klemme mit anderer Polarität (BP1, BN2) jeder Speichereinheit zusammenwirken,
- wobei das besagte In-Reihe-Schalten aktiviert wird, wenn ein Strom durch die besagte Spule (23) fließt,
**dadurch gekennzeichnet, dass** die besagte drehende elektrische Maschine (ALT) eine umkehrbare Maschine ist, die im Generatorbetrieb arbeitet, um mindestens eine Speichereinheit zu versorgen, und im Motorbetrieb, um einen Verbrennungsmotor zu starten, wobei die besagte Maschine (ALT) mit einer entsprechenden Klemme mit anderer Polarität (BN1, BP2) jeder Speichereinheit verbunden ist.

2. System nach Anspruch 1, **dadurch gekennzeichnet, dass** es ein elektromagnetisches Schütz (20) umfasst, das
- mindestens einen ersten Schalter (T1), einen zweiten Schalter (T2) und einen dritten Schalter (T3) umfasst,
- wobei sich das besagte Schütz (20) in Ruhestellung befindet, wenn kein Strom durch die besagte Spule (23) fließt, und in aktiver Stellung, wenn ein Strom durch die besagte Spule (23) fließt,
- und mindestens der erste oder der zweite Schalter in Ruhestellung geschlossen ist und
- der dritte Schalter (T3) in Ruhestellung geschlossen ist.

3. System nach einem der vorhergehenden Ansprüche, **dadurch gekennzeichnet, dass** ein Schalter (T1, T3), der in Ruhestellung offen ist, besteht aus
- einer ersten Gruppe (24a) von Kontakten (C, D, E, F),
- einer zweiten Gruppe (24b) von Kontakten (CDM, EFM), die mit Kontakten (C, D; E, F) der ersten Gruppe von Kontakten in Kontakt kommen.

4. System nach einem der vorhergehenden Ansprüche, **dadurch gekennzeichnet, dass** der zweite Schalter (T2) besteht aus
- einer dritten Gruppe von Kontakten (25) zum Anschluss einer ersten und einer zweiten Klemme (26a, 26b) des Schützes (20).

5. System nach einem der vorhergehenden Ansprüche, **dadurch gekennzeichnet, dass** die besagte zweite Gruppe (24b) von Kontakten (CDM, EFM) mit dem Kern (22) fest verbunden ist.

6. System nach einem der Ansprüche 3 bis 5, **dadurch gekennzeichnet, dass** die Kontakte (C, D, E, F) der ersten Gruppe von Kontakten (24a) mit Klemmen (BN1, BN2, BP1, BP2) von Speichereinheiten verbunden werden.

7. System nach einem der Ansprüche 3 bis 6, **dadurch gekennzeichnet, dass** die zweite Gruppe (24b) von Kontakten (CDM, EFM) auf einer Fläche (33) angeordnet ist, die fest mit dem Kern (22) verbunden ist, und dass das Schütz (20) darüber hinaus winkelige Mittel für die Durchfederung (34) umfasst, die den besagten Kontakten (CDM, EFM) zugeordnet und zwischen den besagten Kontakten (CDM; EFM) und der besagten Fläche (33) angeordnet sind.

8. System nach einem der Ansprüche 3 bis 7, **dadurch gekennzeichnet, dass** das Schütz (20) darüber hinaus
- Dämpfungsmittel (30) zum Dämpfen der Rückfederung zwischen der ersten Gruppe von Kontakten (C, D, E, F) und der zweiten Gruppe von Kontakten (CDM, EFM) umfasst.

9. System nach einem der vorhergehenden Ansprüche, **dadurch gekennzeichnet, dass** es darüber hinaus
- ein erstes leitendes Teil (27b), das eine erste Klemme (26b) des Schützes (20) mit einer ersten Klemme (BP1) einer ersten Speichereinheit (BAT1) verbindet,
- und ein zweites leitendes Teil (27a) umfasst, das eine zweite Klemme (26a) des Schützes (20) mit einer zweiten Klemme (BN2) einer zweiten Speichereinheit (BAT2) verbindet.

10. System nach einem der vorhergehenden Ansprüche, **dadurch gekennzeichnet, dass** das Schütz (20) darüber hinaus eine Feder (31) zum Halten des beweglichen Kerns (22) umfasst.

11. System nach einem der vorhergehenden Ansprüche, **dadurch gekennzeichnet, dass** das Schütz (20) darüber hinaus einen Steuerausgang (32a) umfasst, der die Spule (23) mit einer Steuerelektronik (CMD) verbindet.

12. System nach einem der vorhergehenden Ansprüche, **dadurch gekennzeichnet, dass** das Schütz (20) darüber hinaus eine Drehsperre (35) für den beweglichen Kern (22) umfasst.

13. System nach einem der vorhergehenden Ansprüche, **dadurch gekennzeichnet, dass** das Schütz (20) darüber hinaus einen Luftspalt (F) mit einer Weite (E) in einem Wertebereich zwischen 1,5 mm und 4 mm umfasst.

14. System nach einem der vorhergehenden Ansprüche, **dadurch gekennzeichnet, dass** die Kontakte (C, D, E, F) der ersten Gruppe (24a) von Kontakten feststehend sind.

15. System nach einem der vorhergehenden Ansprüche, **dadurch gekennzeichnet, dass** die Kontakte (CDM, EFM) der zweiten Gruppe (24b) von Kontakten beweglich sind.

16. System nach einem der vorhergehenden Ansprüche, **dadurch gekennzeichnet, dass** das elektromagnetische Schütz (20) darüber hinaus
- einen vierten Schalter (T4) umfasst, der in Ruhestellung geschlossen ist.
